# EUROPEAN PATENT APPLICATION

(11) **EP 1 821 047 A1**
(43) Date of publication of application: **22.08.2007**
(21) Application number: 06425104.4
(22) Date of filing: 20.02.2006
(51) Int. Cl.: F24H 9/20, G05B 23/00

(54) **Boiler testing method and device therefor**

(71) Applicant: Microplan S.r.l., 37066 Sommacampagna VR (IT)
(72) Inventor: Riolfi, Roberto, 37010 Sant Ambrogio di Valpolicella VR (IT)
(74) Representative: Leone, Mario

(57) **Abstract**

A boiler testing method, comprising the steps of connecting inlet (21) and outlet (23) sections of said boiler (2) for connecting to a sanitary system (21) and to a heating system (23), respectively, to a same inlet pipe (110; 210) and of connecting outlet (22) and delivery (24) sections of said boiler (2) for connecting to the sanitary system (22) and to the heating system (24), respectively, to a same discharge pipe (120; 220). The pipes (110, 120; 210, 220) further comprise adjustment means (111, 114, 121), metering means (112, 113, 122, 123) and are apt to make an open circuit, such that the inlet pipe (110; 210) is connected to a water source (31) and the return pipe (120; 220) has an end opening on suitable discharge means (32).

## Description

The present invention refers to a boiler testing method and a testing device therefor.

The testing procedure in heat-producing apparatuses, both for heating and sanitary use, proves particularly important and complex, having to assure the correct operation of all devices produced and the perfect safety of the apparatus.

With regard to boilers for household use, or generally for small-sized and mass-produced apparatuses, the testing proves particularly required and critical. Specifically, boilers for household use generally utilize gaseous fuels, for which perfect tightness of all ducts and efficiency of combustion members should be assured.

Moreover, just for the market for which such boilers are intended, it is required that, once installed, they be already perfectly efficient and assuring the highest possible performances, needing no specific setup procedures.

Hence, most boiler producers perform a testing on all produced boilers prior to marketing them.

Therefore, evidently such a procedure should take place as rapidly and simply as possible, as otherwise it would excessively burden production times and costs.

In order to satisfy both the need of carrying out an effective testing and that of adopting simple procedures test benches have been contrived, to which boilers are connected so as to carry out a battery of tests checking the correct operation thereof once installed.

More precisely, suchlike benches interface to the boiler under testing basically in three different sections, usually composed of three distinct circuits: one for gas flow, one for sanitary-use water and the last one for heating.

The gas circuit of these typical benches is generally made by means of a pipe drawing gas from the network of the building in which the testing is carried out and, at its outlet, it delivers gas to the boiler.

The sanitary circuit is instead made by an inlet pipe, receiving water from the plant piping system and carrying it to the boiler, and by an outlet pipe receiving water from the boiler and discharging it. Note that the sanitary circuit is made with an open configuration, so as to simulate water running that usually takes place in household uses.

The heating circuit is instead a closed one, simulating the working situation of the boiler during its normal operation, in other words, the situation implemented by the circuit made by the central heating units, radiators or alike apparatuses transferring water heat to the environment. For this purpose, heat dissipation is simulated via a water/water exchanger, in turn cooled by mains water.

The testing is performed by means of a battery of tests carried out upon connecting the boiler to said three circuits, re-creating a condition comparable to the operative one. For this purpose, said circuits exhibit contrivances apt to re-create, though on a smaller scale, a situation sufficiently similar to that occurring during a normal use of the boiler.

Moreover, the three circuits are equipped with an array of probes and other metering and adjusting devices, making them capable on the one hand of setting the preferred operative conditions of the system, so as to simulate even emergency situations, on the other hand of recording the boiler behaviour, so as to check its perfect efficiency.

In particular, along all pipes of the various circuits there are arranged, e.g., an array of on/off or proportional valves, of transducers and pressure gauges, of transducers and flow meters, and of transducers and temperature meters.

Such a configuration preventively requires to at least partially fill with water the heating circuit each time a new boiler starts being tested. Hence, such a step sensibly weighs on testing times.

This testing configuration entails also a remarkable drawback connected to disturbance risks that may stem from air bubbles possibly trapped in the circuit. In fact, the presence of air in the circuit causes pressure drop, wrong metering by flow metering instruments, circulation pump malfunctioning, etc.

Moreover, the known-art test benches require an emptying at the end of the test, i.e. a forced outletting from the boiler and, partly, from the bench circuit, of the water contained therein, a step that cannot take place my mere gravity and for which compressed air is commonly used.

Lastly, in these configurations, the flow resistances unavoidably occurring in test bench circuits critically weigh on the testing procedure.

In fact, such resistances are quite often excessive to allow an adequate circulation under the thrust of the circulator with which the boiler is equipped, it being sized to supply networks of central heating units not exhibiting the flow resistances which in test benches are introduced by valves, metering instrumentation, exchangers.

Therefore, it is often necessary for the bench to comprise also an additional pump or circulator, in particular with the increase of the powers thereof, as proportionally also the flow rates at issue increase.

However, also this solution falls short of completely solving the problem, as the additional circulator produces, by its nature, low heads that encountering the flow resistances of the bench are anyhow unable to produce the desired flow rates.

When instead a pump is included, the latter exhibits the opposite limitation: it easily produces high heads, yet boilers are usually equipped with a safety valve giving off (venting) as soon as the typical pressure of 3 bars, or slightly thereabove, is reached: therefore, inserting a pump so as to have it produce good flow rates, yet without exceeding this pressure, is rather complex.

Attempting to solve the problem at its root, flow resistances are reduced, at least within certain limits, by increasing the diameter of the pipes and of all the components included therein. However, this step entails increasing costs and also complications in the systems, it being, e.g., necessary to weld the pipes, since junctions beyond a certain diameter are not usually available on the market. Welded pipes make maintenance more difficult, and with certain materials such as stainless steel processing costs increase.

In short, known testing methods require steps of prearranging the test benches and of rearranging them at the end of the test, which require lengthy times, above all with respect to the overall duration of the testing. Moreover, this feature entails a consequent increase of the testing costs, owing to said downtimes as well as a certain complexity and the cost related to the implementing of said circuits.

Hence, the technical problem underlying the present invention is to provide a boiler testing method overcoming the drawbacks mentioned above with reference to the known art.

Such a problem is solved by a boiler testing method according to claim 1 and by the device therefor according to claim 6.

The present invention provides several relevant advantages. The main advantage lies in that it allows an effective boiler testing, with extremely reasonable testing times and, above all, preparation times, without however requiring the use of particularly complex and expensive components. On the contrary, it limits the number of components utilized, reducing the costs and dimensions.

Moreover, the method according to the present invention overcomes once and for all the problems connected to flow resistances and presence of air bubbles in the heating circuit during testing procedures.

Other advantages, features and the operation modes of the present invention will be made apparent in the following detailed description of some embodiments thereof, given by way of a non-limiting example. Reference will be made to the figures of the annexed drawings, wherein:
figure 1 is a schematic illustration showing the structural arrangement of a boiler testing system according to the present invention;
figure 2 is a schematic illustration showing the structural arrangement of a boiler testing system according to the known art; and
figure 3 is a schematic illustration showing the structural arrangement of a second embodiment of the boiler testing system according to the present invention.

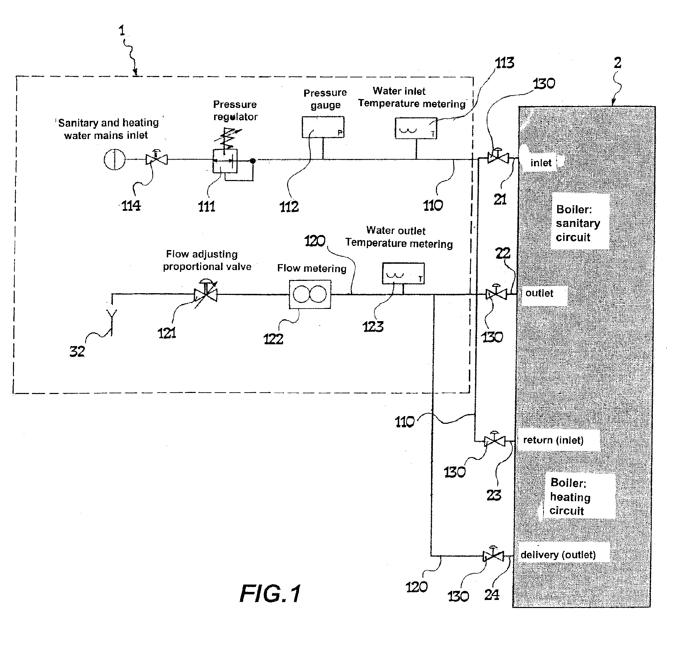

Initially referring to figure 1, a device 1 for testing boilers 2 is connected to a water source 31 that, e.g., may be obtained from the common water mains of the room in which the testing is performed, to discharge means 32, it also optionally, but not necessarily, part of said water mains, and finally to respective sanitary inlet 21, heating return 23, sanitary outlet 22 and heating delivery 24 sections of the boiler 2.

In particular, note that the testing method and device therefor according to the present invention apply to household boilers in which two distinct circuits are present: one for generating hot water for sanitary uses and the other one for heating by heat exchanging means.

Hence, this typology of boilers has respective inlet 21 and outlet 22 sections for connecting to a sanitary system and return 23 and delivery 24 sections for connecting to the heating system. During installation, said sections are separately connected to said systems, forming two distinct circuits, the first one being commonly called "sanitary" and the second one "heating". Hence, the denomination adopted for said sections refers to the features of installation and subsequent use of the boiler 2.

The boiler testing method according to the present invention envisages the connecting of said inlet/return sections 21, 23 to a same inlet pipe 110 and the outlet/delivery sections 22, 24 to an additional single discharge pipe 120.

More precisely, according to a preferred embodiment, the inlet pipe 110 has, at one end thereof, a branch allowing the connecting to the two inlet/return sections 21, 23; the former, at the other end thereof, is connected to the water source 31.

Likewise, the discharge pipe 120 has it also a branch for the outlet/delivery sections 22, 24 and is instead connected to the discharge means 32. The discharge means 32 may optionally be connected to a recirculation system, not illustrated in the figure, replenishing water to the water source 31. However, the presence of such a recirculation system is not indispensable to the operation of the present method, according to which water may be drawn merely from any one source and intended for any kind of discharge.

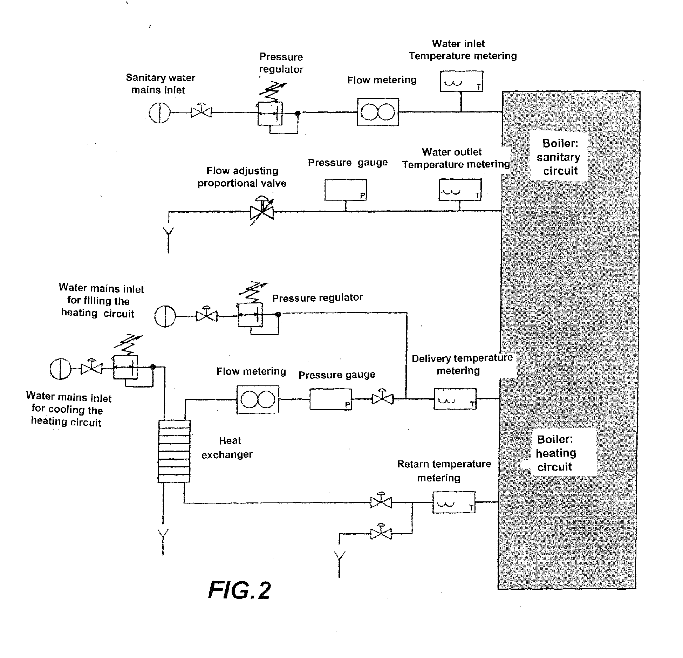

On the contrary, known-art testing devices, their operation diagram being illustrated in figure 2, comprise two separate pipe sets operating in a distinct manner, to which the connecting sections leading to the sanitary circuit and to the heating circuit, respectively, are connected.

Moreover, in particular the pipes connected to the heating circuit form a closed circuit or loop and comprise, as indicated in the foregoing, a heat exchanger, which instead is not required in the implementing of the testing method according to the present invention.

The boiler 2 is also connected to a fuel source, not illustrated in the figure, analogously to what is carried out according to the known art.

Anyhow, fuel supply is adjusted by a valve and monitored during the testing, so as to carry out a battery of tests and detect boiler performances as well as any losses.

However, the use of such a system for supplying fuel to the boiler is well-known to a person skilled in the art and, therefore, will not be further detailed hereinafter.

Referring again to figure 1, the pipes 110 and 120 further comprise adjustment means 111, 121 for adjusting the flow of water circulating therein during the testing steps, intercepting means 114, and gauging/metering means 112, 113, 122, 123.

In particular, according to a preferred embodiment, the inlet pipe 110 comprises an on/off-type intercepting valve 114, allowing to open up the flow of liquid into the boiler 2 only when needed.

Moreover, the inlet pipe 110 comprises also a pressure adjuster (regulator) 111, enabling to adjust the pressure with which water is inletted into the boiler circuits. Besides said adjustment means, also a pressure-gauging probe 112 and a temperature-metering probe 113 are present, allowing to monitor the conditions at which water is sent into the boiler 2.

The discharge pipe 120 instead comprises, always according to a preferred embodiment, a temperature-metering probe 123, allowing, along with that present at the inlet, to assess the performances of the boiler 2 during its operation, a flow-metering probe 122, and a proportional valve 121 for adjusting the flow, allowing to parcel the flow downstream, prior to reaching the discharge means 32.

However, evidently such a configuration refers to a preferred embodiment of the present invention, to which variants could be effected according to various testing needs or to different kinds of testing carried out.

The device according to the present invention further comprises selection means 130, implemented by additional on/off-type intercepting valves, located at the inlet 21/return 23 and outlet 22/delivery 24 sections, allowing to selectively connect one of the sanitary or heating circuits to the pipes 110 and 120.

The configuration basically allows to perform the same tests that are carried out with testing devices according to the known art, yet with relevant advantages in terms of simplicity and time. For clarity's sake in the description, some of these tests are set forth hereinafter, remarking when necessary the differences, with respect to known procedures, occurring in the method according to the present invention.
- Boiler cooling during fuel valve Max/Min adjusting steps.

During the normal use of the system, owing to the temperature drop of the heating circuit, e.g. by drop in the external temperature, a greater amount of energy is requested to the apparatus. For this reason, the gas delivery valve with which the apparatus is equipped is calibrated on two levels of delivery, maximum and minimum (Max/Min) .

This test allows to keep control on the boiler behaviour during the fuel valve adjusting steps, that vary the amount of energy provided by the apparatus, in particular by dissipating this energy and thereby limiting the temperatures reached.

In traditional benches it is utilized the heat exchanger present in the heating circuit pipe, that is cooled so as to remove energy both from the bench heating circuit and from the boiler.

In the method according to the present invention, cold water directly enters the boiler, exiting therefrom going to the discharge 32, thereby producing a direct rather than an indirect cooling. Hence, such a control may be carried out by means of the adjusting of the fluid transiting in the boiler, thanks to the proportional valve 121 and therefore of the temperature of the water exiting the boiler 2 by means of the section 24.
- Comparing boiler outlet temperature to in-boiler temperature

The probe 123 for metering the temperature on the discharge pipe 120 is connected to the boiler delivery. Therefore, the temperature metering provided thereby allows to carry out the comparison to the temperature internal to the boiler 2, the former being equivalent to that at the boiler outlet, and therefore a check of the correct operation of the in-boiler probes.
- Circulation pump functionality check

This check allows to meter the flow produced by a circulation pump, when present in the boilers, inside a closed circuit.

As the method according to the present invention does not envisage the connecting of closed circuits, for carrying out such a test two alternatives are viable.

The first one consists in interrupting the flow by means of suitable valves and then metering the head produced by the pump, which anyhow remains in operation. This metering may be detected by a differential pressure transducer placed between the return section 23 and the delivery section 24 of the heating circuit of the boiler 2. Such an instrument is absent from the scheme of figure 1.

A second solution envisages incorporating in the device an additional bypass pipe, not illustrated in figure, between the inlet and the discharge ones, controlled by an intercepting valve. In this case, to perform the test the outlet to the discharge pipe 120 is closed, the bypass pipe is opened and the flow produced by the circulation pump in this sort of loop is metered; said loop is created for this time only and utilized exclusively in this test, at the end of which the bypass is closed up, returning to the open circuit.
- Modulation capability check

By this test it is checked that at the rising of the delivery temperature the boiler control gradually reduces the intensity of the burner flame present therein.

To effect this condition, it is possible to reduce the flow into the discharge pipe 120, by means of the proportional valve 121. Thus, less heat is subtracted to the outlet section of the boiler, which will sense a temperature rise condition, re-creating the conditions for lowering the burner flame.

In general, however, there could be also other alternatives for the tests listed above, that on the other hand evidently cannot be deemed exhaustive. Said alternatives may be due to the existence of various typologies of boilers and to the various preferences of their producers.

According to what has been illustrated hereto, it may be noted that the method according to the present invention allows a saving in the testing times, requiring no preliminary water-filling of any circuit. At the opening of the valves 114 and 130 of the circuit, water flows into the boiler 2, allowing the ignition thereof. Ignition however occurs very rapidly, as open pipes are utilized, with discharge at atmospheric pressure and supplied at a pressure indicatively set at 2 bars or more.

Should said step require even some seconds, it has to be understood that the boiler usually needs a technical time for ignition, and therefore the time required for water arrival is practically nil.

Moreover, also the problems of stagnation of air bubbles in the circuit are solved, as the continual supply with network water under pressure, provided by the water source 31, produces a continuum of the air present in the pipes toward the discharge, with an overall holding of the pressure in the device.

The emptying of the boiler and of the present device at the end of the testing takes place over times shorter with respect to the known art, as the method according to the present invention allows to utilize pipes of shorter length.

Also the above-described tests may indicatively be carried out in shorter times with respect to the known art.

A further advantage is related to the lesser dimensions and cost of the device, as the sanitary and heating circuit, made up by separate pipes in traditional test benches, may be implemented by a single pair of pipes and by a single set of metering instruments. In this case, in fact, both work on the boiler in a very similar manner, since also the heating circuit becomes an open circuit.

Note that this is possible also because, due to how boilers are designed and tests carried out, the two circuits do not need to be concomitantly active.

Hence, the device according to the present invention utilizes a lesser number of components and therefore has smaller overall dimensions, but, above all, lower costs.

Moreover, the method according to the present invention allows to solve the problem related to flow resistances and to avoid the entailed device manufacturing complexity.

In fact, the problems connected to water circulation do not crop up, as the in-boiler water transit is assured by the pressure provided by the water source 31, and by the discharge means 32.

As a direct consequence, also owing to effects connected to the use of a higher thermal head, for reasons that will be disclosed hereinafter, the diameter of the pipes may be a reduced one, even for very powerful boilers.

These two aspects remarkably contribute to keep costs reasonable.

Lastly, the presence of the proportional valve 121 at the discharge pipe 120 allows to attain a consistent saving in water consumption during boiler testing. In fact, by controlling the proportional valve depending on the delivery temperature it is possible to meter the flow so as to use the water amount strictly necessary to keep the boiler in an ON state.

As already mentioned above, by the use of the proportional valve 121, acting on the outlet flow, it is possible to adjust the temperature in the discharge pipe, and therefore in the delivery section of the boiler.

In the testing method according to the present invention, the inlet and discharge pipes are not connected therebetween; therefore, by acting on the proportional valve it is possible to increase the thermal head in which the boiler works.

This feature may advantageously be exploited in the boiler testing procedure, during which it suffices to check that the boiler be capable of producing the power required for the system for which it is intended, without necessarily re-creating the conditions under which it should actually operate.

Hence, a same thermal power may be developed by the boiler utilizing a lower flow rate and a higher thermal head, with an entailed saving in water consumption.

As a further consequence, and as already mentioned in the foregoing, the device according to the present invention may thus utilize pipes of reasonable size, requiring lower flow rates with respect to the known art.

Moreover, it will be understood that the present invention is susceptible of several embodiments alternative to the one described hereto, some of which are briefly illustrated hereinafter with reference to the sole aspects differentiating them from the first embodiment considered hereto.

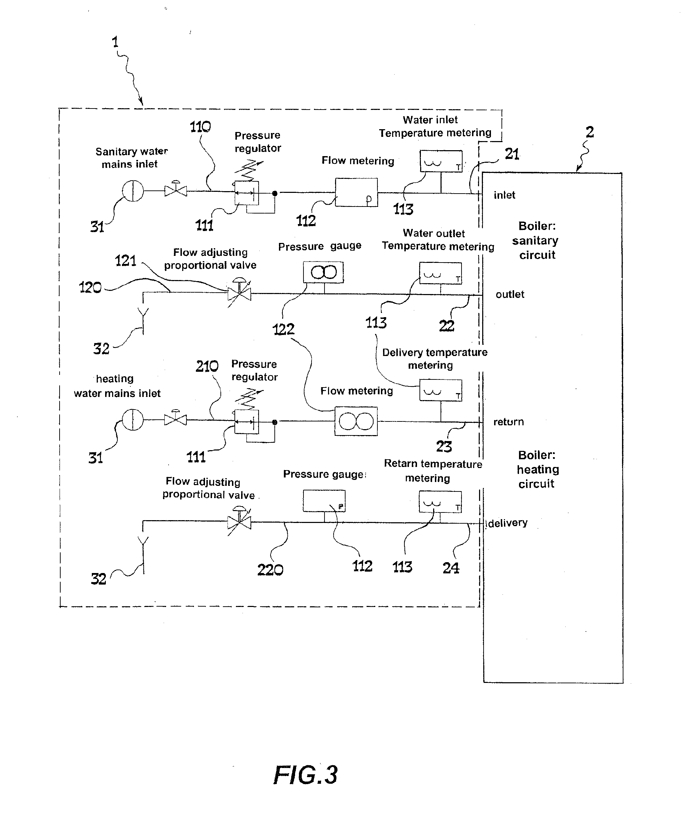

Therefore, referring to figure 3, the inlet 21 /return 23 and outlet 22 / delivery 24 sections may alternatively be connected to distinct inlet 110, 210 and discharge 120, 220 pipes, respectively.

In said configuration, basically two distinct circuits are made, both open; one for connecting respective sanitary sections 21, 22 and one for connecting heating sections 23, 24.

In particular, this configuration may be used when the sanitary sections 21, 22 and the heating ones have different features therebetween, e.g. due to the different diameters of the sections, and therefore the connecting to alike pipes is not viable.

Anyhow, this testing device attains the same advantages described with reference to the preceding embodiment, with greater application versatility. Yet, evidently this solution requires higher manufacturing costs and dimensions with respect to the preceding instance.

The present invention has hereto been described with reference to preferred embodiments thereof. It is understood that there could be other embodiments referable to the same inventive kernel, all falling within the protective scope of the claims set forth hereinafter.

## Claims

1. A boiler testing method, comprising the steps of:
• connecting respective inlet (21) and outlet (23) sections of said boiler (2), intended to connect said boiler (2) to a sanitary system and to a heating system, respectively, to an inlet pipe (110; 210) connected to a water source (31);
• connecting respective outlet (22) and delivery (24) sections of said boiler (2), for connecting to said sanitary system and to said heating system, respectively, to a discharge pipe (120; 220) having an end opening on suitable discharge means (32);
said pipes (110, 120; 210, 220) comprising adjustment means (111, 114, 121), metering means (112, 113, 122, 123) and being apt to make an open circuit.

2. The method according to the preceding claim, comprising a further step of adjusting the flow in said discharge pipe (120; 220) by means of an adjustment proportional valve (121).

3. The method according to one of the preceding claims, wherein said respective sections (21, 23) of said boiler (2) are connected to a same inlet pipe (110), and said respective sections (22, 24) of said boiler (2) are connected to a same outlet pipe (120).

4. The method according to one of the preceding claims, wherein said sections (21, 22) for connecting to the sanitary system and said sections (23, 24) for connecting to the heating system are selectively connectible to said pipes (110, 120; 210, 220) via suitable selecting means (130).

5. The method according to the preceding claim, wherein said step of adjusting the flow of said discharge pipe (120; 220) is apt to carry out a variation in the temperature of said discharge pipe (120; 220), so as to adjust the thermal head made by said boiler (2) between said inlet (110; 210) and discharge (120; 220) pipes.

6. A device (1) for testing boilers (2) comprising an inlet pipe (110; 210) connected to a water source (31) and an outlet pipe (120; 220), having an end opening on suitable discharge means (32), said pipes (110, 120) comprising adjustment means (111, 114, 121), metering means (112, 113, 122, 123) and being apt to make an open circuit,
**characterised in that** said inlet pipe (110; 210) is apt to be connected to an inlet section (21) for connecting to a sanitary system and to a return section (23) for connecting to a heating system (23), and said discharge pipe (120; 220) to outlet sections (22) for connecting to said sanitary and delivery system (24) for connecting to said heating system.

7. The device (1) according to the preceding claim, wherein said adjustment means comprises a pressure adjuster (111) and an intercepting valve (114) connected to said inlet pipe (110; 210).

8. The device (1) according to claim 6 or 7, wherein said adjustment means comprises a proportional valve (121) for adjusting the flow, connected to said discharge pipe (120; 220).
